# EUROPEAN PATENT APPLICATION

(11) **EP 4 796 992 A1**
(43) Date of publication of application: **26.08.2026**
(21) Application number: 24884561.2
(22) Date of filing: 24.10.2024
(51) Int. Cl.: G02F 1/13363, G02B 27/01

(54) **DISPLAY MODULE, DISPLAY SYSTEM, AND VEHICLE**

(30) Priority: 31.10.2023 CN 202311442955
(71) Applicant: HUAWEI TECHNOLOGIES CO., LTD., Shenzhen 518129 (CN)
(72) Inventor: CHEN, Shijie, Shenzhen, Guangdong 518129 (CN); HU, Hongbo, Shenzhen, Guangdong 518129 (CN)
(74) Representative: Pfenning, Meinig & Partner mbB
(86) International application number: PCT/CN2024/127045
(87) International publication number: WO 2025/092557

(57) **Abstract**

A display assembly (200) is provided, and may be used in a projection display apparatus, for example, a head-up display system. The display assembly (200) can eliminate dark-state light leakage of a display component (210), to improve contrast of a display system and improve imaging performance of the display system. The display assembly (200) includes the display component (210) and a phase compensation element (220). There is a first included angle greater than 0 between a normal line of a light-emitting plane of the display component (210) and a normal line of a light-emitting plane of the phase compensation element (220). There is a second included angle greater than 0 between a first coordinate axis of the light-emitting plane of the display component (210) and a first coordinate axis of the light-emitting plane of the phase compensation element (220). There is a third included angle greater than 0 between a second coordinate axis of the light-emitting plane of the display component (210) and a second coordinate axis of the light-emitting plane of the phase compensation element (220). The display component (210) is configured to emit a plurality of first light beams from a plurality of different angles, so that the phase compensation element (220) can compensate for a phase difference of each of the plurality of first light beams.

## Description

This application claims priority to Chinese Patent Application No. 202311442955.8, filed with the China National Intellectual Property Administration on October 31, 2023 and entitled "DISPLAY ASSEMBLY, DISPLAY SYSTEM, AND TRANSPORTATION MEANS", which is incorporated herein by reference in its entirety.

### TECHNICAL FIELD

This application relates to the field of optical display, and more specifically, to a display assembly, a display system, and a transportation means.

### BACKGROUND

With continuous progress and development of science and technology, as an important tool for information transmission and display, display components undergo a series of innovations and development and evolve from earliest mechanical and electronic display modes to a modern high-resolution and high-brightness flat-panel display technology. These groundbreaking innovations change our way of life, and also have profound impact on our way of work and entertainment. Contrast is an important indicator for evaluating picture quality of the display component. Higher contrast indicates a larger brightness difference between black and white pictures and better visual experience for human eyes. However, dark-state light leakage phenomena usually exist in the display components, and this feature greatly limits improvement of contrast of display systems. Therefore, how to reduce residual dark-state light leakage of the display components to improve the contrast is a problem that needs to be urgently resolved.

### SUMMARY

This application provides a display assembly, a display system, and a transportation means. The display assembly provided in this application can eliminate dark-state light leakage of a display component, to improve contrast of the display system and improve imaging performance of the display system.

According to a first aspect, an embodiment of this application provides a display assembly. The display assembly includes a display component and a phase compensation element. There is a first included angle greater than 0 between a normal line of a light-emitting plane of the display component and a normal line of a light-emitting plane of the phase compensation element. There is a second included angle greater than 0 between a first coordinate axis of the light-emitting plane of the display component and a first coordinate axis of the light-emitting plane of the phase compensation element. There is a third included angle greater than 0 between a second coordinate axis of the light-emitting plane of the display component and a second coordinate axis of the light-emitting plane of the phase compensation element. The display component is configured to emit a plurality of first light beams from a plurality of different angles. The phase compensation element is configured to compensate for a phase difference of each of the plurality of first light beams.

The display component and the phase compensation element that are placed in a three-dimensionally oblique state are used, to compensate for, to different degrees, phase differences of the light beams emitted from the plurality of angles, so that phenomena of residual dark-state light leakage of the display component are reduced, and contrast of the display component is improved.

With reference to the first aspect, in some implementations of the first aspect, the display assembly further includes an anti-reflection element, and the anti-reflection element is located between the display component and the phase compensation element. The anti-reflection element is configured to reduce reflected light from the light-emitting plane of the display component.

Based on the foregoing solution, the anti-reflection element can further reduce the reflected light from a surface of the display component when the phase compensation element and the display component are precisely angle-matched, to further reduce dark-field brightness of the display component and improve the contrast.

With reference to the first aspect, in some implementations of the first aspect, the anti-reflection element is arranged on a surface of the phase compensation element.

With reference to the first aspect, in some implementations of the first aspect, the anti-reflection element is arranged on a surface of the light-emitting plane of the display component.

Based on the foregoing solution, the anti-reflection element is arranged at different positions, so that design flexibility of the display assembly can be improved.

According to a second aspect, an embodiment of this application provides a display system. The display system includes a light source and the display assembly according to the first aspect and any one of the possible implementations of the first aspect. The light source is configured to: generate incident light, and emit the incident light to the display assembly. The display assembly generates a first image based on the incident light.

With reference to the second aspect, in some implementations of the second aspect, the display system further includes a micro lens array and a first polarization element. The micro lens array is located between the light source and the first polarization element, and the first polarization element is located between the micro lens array and the display assembly. The micro lens array is configured to: homogenize the incident light, and emit a homogenized second light beam to the first polarization element. The first polarization element is configured to: convert the second light beam into first polarized light, and emit the first polarized light to the display assembly. The display assembly generates the first image based on the first polarized light.

With reference to the second aspect, in some implementations of the second aspect, the display system further includes a collimating element, and the collimating element is located between the light source and the micro lens array. The collimating element is configured to: collimate the incident light, and emit a collimated third light beam to the micro lens array. The micro lens array is specifically configured to: homogenize the third light beam, and generate the second light beam.

With reference to the second aspect, in some implementations of the second aspect, the display system further includes a projection module. The display assembly is configured to: emit, to the projection module, first image light corresponding to the first image. The projection module is configured to generate a second image based on the first image light.

With reference to the second aspect, in some implementations of the second aspect, the display system further includes a second polarization element, and the second polarization element is located between the display assembly and the projection module. The second polarization element is configured to: convert the first image light into second polarized light, and emit the second polarized light to the projection module, where a polarization direction of the first polarized light is perpendicular to a polarization direction of the second polarized light. The projection module is configured to generate the second image based on the second polarized light.

With reference to the second aspect, in some implementations of the second aspect, the display system further includes a polarizing beam splitter, and the polarizing beam splitter is located between the first polarization element and the display assembly. The polarizing beam splitting element is configured to: reflect the first polarized light to the display component, and transmit the second polarized light to the projection module.

According to a third aspect, an embodiment of this application provides a transportation means. The transportation means includes the display system according to the second aspect and any one of the possible implementations of the second aspect and a windshield. The projection module is configured to: emit, to the windshield, second image light corresponding to the second image. The windshield is configured to reflect the second image light to a human eye.

According to a fourth aspect, an embodiment of this application provides an in-vehicle system. The in-vehicle system includes the display system according to the second aspect and any one of the possible implementations of the second aspect.

### BRIEF DESCRIPTION OF DRAWINGS

FIG. 1 is a diagram of a principle of generating dark-state light leakage by an LCoS;
FIG. 2 is a diagram of a structure of a first display assembly 200 according to an embodiment of this application;
FIG. 3 is a diagram of representing a three-dimensional placement state of a first display assembly 200 by using an in-plane angle and an out-of-plane angle according to an embodiment of this application;
FIG. 4 is a diagram of a structure of a second display assembly 400 according to an embodiment of this application;
FIG. 5 is a diagram of representing a three-dimensional placement state of a second display assembly 400 by using an in-plane angle and an out-of-plane angle according to an embodiment of this application;
FIG. 6(a) and FIG. 6(b) are a diagram of simulated effect of light leakage according to an embodiment of this application;
FIG. 7 is a diagram of contrast effect according to an embodiment of this application;
FIG. 8 is a diagram of a structure of a third display assembly 800 according to an embodiment of this application;
FIG. 9 is a diagram of a first display system 900 according to an embodiment of this application;
FIG. 10 is a diagram of a second display system 1000 according to an embodiment of this application;
FIG. 11 is a diagram of a third display system 1100 according to an embodiment of this application;
FIG. 12 is a diagram of a fourth display system 1200 according to an embodiment of this application;
FIG. 13 is a diagram of a structure of a fifth display system 1300 according to an embodiment of this application;
FIG. 14 is a diagram of a structure of a sixth display system 1400 according to an embodiment of this application;
FIG. 15 is a diagram of a HUD system 1500 according to an embodiment of this application;
FIG. 16 is a diagram of an optical path 1600 of a HUD system applied to a transportation means according to an embodiment of this application;
FIG. 17 is a circuit schematic of a display apparatus according to an embodiment of this application; and
FIG. 18 is a diagram of a possible functional framework of a transportation means according to an embodiment of this application.

### DESCRIPTION OF EMBODIMENTS

The following describes technical solutions of this application with reference to accompanying drawings.

The technical solutions provided in this application may be applied to the field of display technologies, for example, a direct-view display system and a projection display system. A feature of the direct-view display system is that a displayed image is presented on a display component, a user watches the displayed image on the display component, and a geometric size of the display component is basically the same as a size of the displayed image. For example, a size of a color image displayed on a 32-inch liquid crystal display (liquid crystal display, LCD) is also 32 inches. A feature of the projection display system is that an image presented on a display component needs to be enlarged by an optical system (usually referred to as an optical engine or an optical machine), and finally the enlarged image is displayed on a projection screen. Therefore, a size of the projection display component is inconsistent with a size of an image that can be displayed. For example, a 0.7-inch or 1.3-inch projection display component may display a 50-inch image. Usually, the projection display system includes a circuit system, the optical system, an imaging component, a projection lens, and a projection screen. A common projection display system is, for example, a head-up display (head-up display, HUD) system, a home theater projection system, an augmented reality (augmented reality, AR) head-mounted display, or a virtual reality (virtual reality, VR) head-mounted display. In addition, the technical solutions of this application may be further applied to a micro imaging system and the like.

For ease of understanding of embodiments of this application, the following descriptions are provided.

First, in the following text descriptions or accompanying drawings in embodiments of this application, terms such as "first", "second", and various numbers are merely used for differentiation for ease of description, but are not used to limit the scope of embodiments of this application. For example, a first light beam, a second light beam, and the like are used to distinguish between different light beams.

Second, in descriptions of embodiments of this application, "a plurality of" means two or more, and "at least one" and "one or more" mean one, two, or more. The singular expression forms "one", "a", "the", "the foregoing", "this", and "the one" are intended to include an expression form like "one or more", unless the opposite is explicitly indicated in the context thereof.

Third, reference to "some embodiments" or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

Fourth, in the descriptions of embodiments of this application, an orientation or a position relationship indicated by the term "front", "up", "right", or the like is defined relative to an orientation or a position at which a component is schematically placed in the accompanying drawings. It should be understood that these directional terms are relative concepts, and are used for relative description and clarification instead of indicating or implying that a specified apparatus or component needs to have a specific orientation or be constructed and operated in a specific orientation. These direction terms may vary based on changes of positions of the components in the accompanying drawings, and therefore cannot be understood as a limitation on this application.

Fifth, in the following embodiments of this application, terms such as "include", "have", and any variants thereof mean to cover non-exclusive inclusion. For example, a process, method, system, product, or device that includes a series of steps or units is not necessarily limited to those steps or units that are expressly listed, but may include another step or unit not expressly listed or inherent to such a process, method, product, or device.

Sixth, in embodiments of this application, terms such as "example" or "for example" are used to represent giving an example, an illustration, or a description. An embodiment or design scheme described with "example" or "for example" should not be explained as being more preferred or having more advantages than another embodiment or design scheme. The term such as "example" or "for example" is used to present a related concept in a specific manner for ease of understanding.

Seventh, in embodiments of this application, a same reference numeral indicates a same component part or a same part. In addition, parts in the accompanying drawings are not drawn strictly to scale. Dimensions and sizes of the parts shown in the figures are merely examples. This should not be construed as a limitation on this application.

Eighth, unless otherwise limited, all terms (including technical and scientific terms) used in this application have same meanings as understood usually by a person of ordinary skill in the art to which this application belongs. It should be further understood that, terms (such as those defined in common dictionaries) should be interpreted as having meanings consistent with their meanings in the context of related technologies, and will not be interpreted in an idealized or excessive formal sense, unless expressly defined in this specification.

Ninth, this application relates to an anti-reflection coating (anti-reflection coating, AR), which is also referred to as an anti-reflective coating or an anti-reflection film. The film is usually made of a material with a high refractive index and a material with a low refractive index alternately. A film layer with a high refractive index causes a phase delay of a light wave, and a film layer with a low refractive index causes a phase advance of the light wave. When light is incident from an external medium to a surface of a substrate, a part of light waves are reflected from the surface of the substrate, and the other part of light waves are transmitted through the substrate, and are reflected and emitted again, to interfere with reflected light from the surface. Therefore, a thickness and a refractive index of each layer are controlled, so that interference effect on the surface of the substrate is minimized, to reduce reflection and increase transmission. The AR is plated on the substrate, so that an anti-reflection element for reducing the reflected light can be formed.

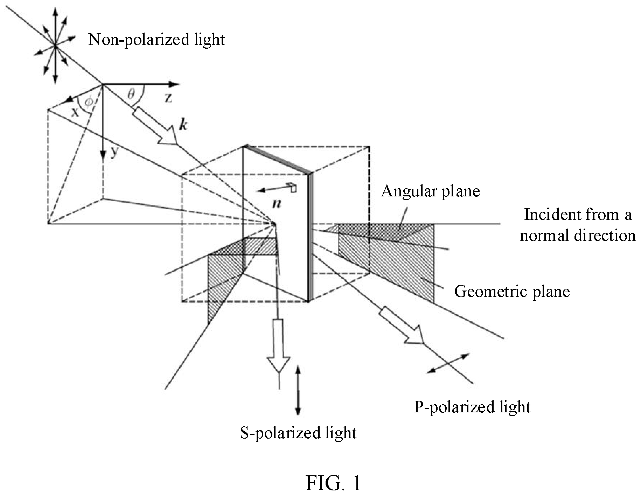

A liquid crystal on silicon (liquid crystal on silicon, LCoS) is an optical component that uses a liquid crystal material to control a propagation direction and a phase of light. In an LCoS component, an orientation of liquid crystal molecules may be adjusted by an electric field, to change a phase and a polarization state of incident light. However, due to a birefringent property of the liquid crystal material, a dark-state light leakage phenomenon occurs when the LCoS works. As shown in FIG. 1, a reason for dark-state light leakage is mainly that the LCoS component cannot be an ideal component, and a light beam emitted by a light source is incident to the LCoS component at a specific oblique incident angle. If an internal propagation angle of the light beam in a spatial propagation process is defined as (δ, σ), and two mutually perpendicular unit vectors of the LCoS component are c₁ and c₂, a spatial wave vector of the incident light beam may be expressed as: $\vec{k} = k \left(sin δ cos σ,sin δ sin σ,cos σ\right)$

In this case, after incident light within a range of c₁ *= x* and c₂ *= y* passes through the liquid crystal molecules, a transmittance T of the incident light may be expressed as the following form. That is, the dark-state light leakage may be expressed as: $T = \frac{1}{2} \frac{{sin}^{4} δ {sin}^{2} σ {cos}^{2} σ}{2 \left(1-{sin}^{2} δ {sin}^{2} σ\right) \left(1-{sin}^{2} δ {cos}^{2} σ\right)}$

To reduce dark-state light leakage phenomena in the LCoS component, some technical means may be used, for example, increasing a thickness of a liquid crystal layer, changing an orientation manner of the liquid crystal material, and using a material that suppresses birefringence. In addition, design and a manufacturing process of the LCoS may be further optimized to reduce the dark-state light leakage.

However, these means have limited capabilities of reducing the dark-state light leakage, resulting in unsatisfactory contrast improvement. In addition, these means face difficulties such as high costs, complex processes, unsuitability for mass production, and a small application scope.

In view of this, embodiments of this application provide a display assembly. A proper phase compensation element is placed in front of a display component, and at least one element of the display component and the phase compensation element is adjusted on three-dimensional coordinates, so that relative positions of the display component and the phase compensation element present a three-dimensional form structure, to compensate for a phase difference of a light beam, reduce dark-state light leakage, and further improve display contrast.

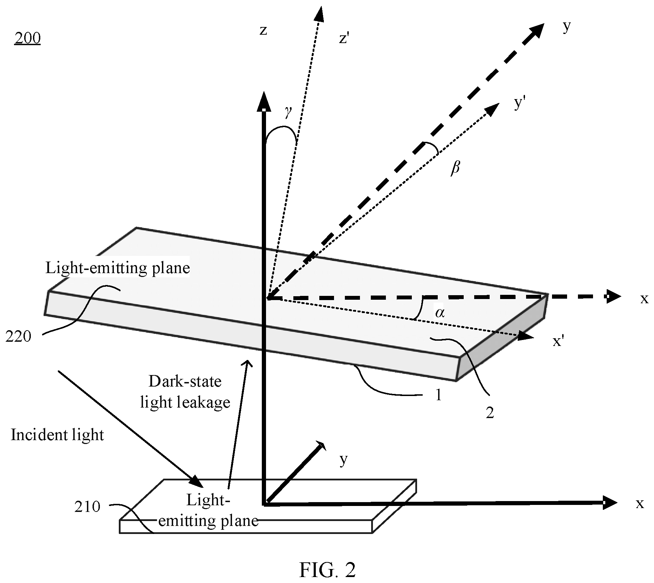

FIG. 2 is a diagram of a structure of a first display assembly 200 according to an embodiment of this application. The display assembly 200 includes a display component 210 and a phase compensation element 220. The display component 210 is configured to emit a plurality of light beams from a plurality of different angles. The phase compensation element 220 is configured to compensate for a phase difference of each of the plurality of light beams emitted by the display component 210.

Specifically, as shown in FIG. 2, a light-emitting plane of the display component 210 is parallel to a horizontal plane, and a light-emitting plane of the phase compensation element 220 is placed in a three-dimensionally oblique manner relative to the horizontal plane. The light-emitting plane of the display component 210 is an x*oy* plane, a normal line of the light-emitting plane of the display component 210 is in a z-axis direction, the light-emitting plane of the phase compensation element 220 is an *x*'*oy*' plane, and a normal line of the light-emitting plane of the phase compensation element 220 is in a *z*'-axis direction. There is an included angle α not equal to 0 between an x-axis and an *x*'-axis. There is an included angle β not equal to 0 between a y-axis and a *y*'-axis. There is an included angle γ not equal to 0 between the z-axis and the *z*'-axis.

Optionally, the display component 210 is an LCoS display chip or an LCD display chip. This is not limited in this application.

It should be noted that, in this embodiment of this application, the light-emitting plane of the display component 210 and the light-emitting plane of the phase compensation element are defined based on an angle of dark-state light leakage emitted by the display component 210. It can be learned from the foregoing description in FIG. 1 that, after incident light that is obliquely incident passes through the display component 210, due to birefringent properties of liquid crystal molecules, some light beams cannot be completely modulated. That is, there is a phase difference between two components that are of the light beams and that are perpendicular to each other, which causes dark-state light leakage emission from the display component 210. The emitted light beams are emitted from the display component 210, incident to a surface of the phase compensation element 220 (namely, a surface 1 in FIG. 2), and transmitted through the phase compensation element 220 to be emitted from another surface (namely, a surface 2 in FIG. 2). Therefore, based on a propagation direction of the light beam generated by the light leakage, the light-emitting plane of the display component 210 and the light-emitting plane of the phase compensation element 220 are separately shown in FIG. 2.

It may be understood that, in the description of this embodiment of this application, the light-emitting plane of the display component 210 and the light-emitting plane of the phase compensation element 220 are defined to illustrate that a three-dimensionally oblique state is set between the display component 210 and the phase compensation element 220. The three-dimensionally oblique state is defined by using the included angle between the coordinate axes of the light-emitting plane of the display component 210 and the light-emitting plane of the phase compensation element 220 and the included angle between the normal lines of the two light-emitting planes. That is, different included angles may correspond to different three-dimensionally oblique states.

It may be further understood that, the three-dimensionally oblique state that is set between the display component 210 and the phase compensation element 220 may alternatively be described by using an angle of the incident light. In this case, an incident light plane of the display component 210 is still the x*oy* plane shown in FIG. 2, with a normal direction perpendicular to the x*oy* plane and oriented upward. An incident light plane of the phase compensation element 220 is the surface 1, a plane coordinate system of the surface 1 is still the *x*'*oy*' plane, but a normal direction of the surface 1 is opposite to a normal direction of the surface 2.

It should be noted that, for the LCoS display chip (where the display chip may also be referred to as a display component) or the LCD display chip, when dark-state light leakage exists, because the phase compensation element 220 is not parallel to the display component 210 in three coordinate axis directions, for light beams generated by dark-state light leakage emitted from the display component 210 at different angles, phases compensated by the phase compensation element 220 for the light beams are also different, so that phase compensation can be implemented for the light beam generated by the light leakage at each angle. For example, when the display component 210 is an LCoS display chip, the LCoS display chip emits a plurality of light beams from a plurality of different angles. Because liquid crystal molecules have different phase modulation effect, phase differences of o light and e light in the plurality of light beams are different. After the plurality of light beams pass through the phase compensation element 220, because three-dimensional coordinates at different positions of the phase compensation element 220 are different, phase compensation effect of the phase compensation element 220 for the plurality of light beams are also different after the plurality of light beams are incident to different positions of the phase compensation element 220, to implement different phase compensation effect for light beams at different angles.

It may be understood that FIG. 2 is described by using an example in which the light-emitting plane of the display component 210 is parallel to the horizontal plane. In this case, the phase compensation element 220 is arranged above the display component 210. In some other embodiments, the phase compensation element 220 may alternatively be arranged in another direction of the display component 210, for example, on a right side of the display component 210. In this case, the light-emitting plane of the display component 210 is parallel to an xoz plane, and the light beam of the light leakage emitted by the display component 210 is propagated rightward to the phase compensation element 220. Similarly, for another arrangement scenario, details are not described herein again.

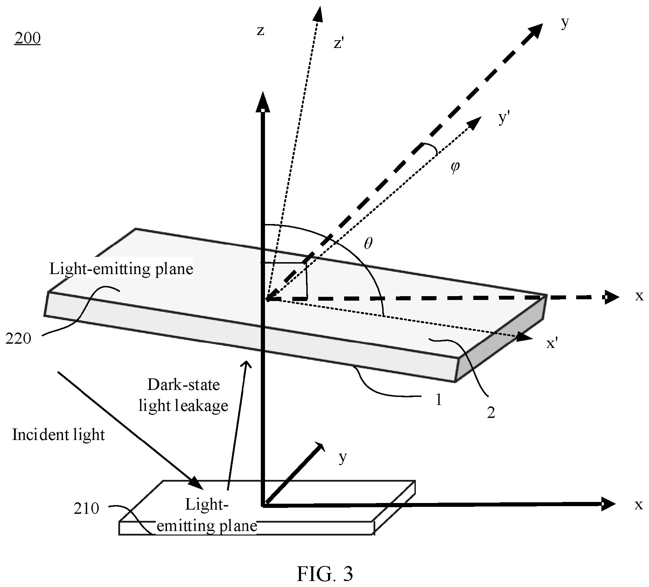

It may be further understood that, because the included angles (the included angle α, the included angle β, and the included angle γ in the foregoing description) between the display component 210 and the phase compensation element 220 are not 0, it may be understood as that the phase compensation element 220 rotates on all the three coordinate axes relative to the display component 210, so that the phase compensation element 220 and the display component 210 are in a three-dimensional spatial placement state. In addition, in FIG. 2, a three-dimensional coordinate system is used to describe the three-dimensional spatial placement state between the display component 210 and the phase compensation element 220. However, this application is not limited thereto. In some other descriptions, the three-dimensional spatial placement state of the display component 210 and the phase compensation element 220 may alternatively be described by using an in-plane angle φ and an out-of-plane angle θ. The in-plane angle φ is a rotation angle of any coordinate axis of the light-emitting plane of the phase compensation element 220 relative to a corresponding coordinate axis of the light-emitting plane of the display component 210. For example, in FIG. 3, the in-plane angle φ indicates that the phase compensation element 220 overlaps the y-axis of the display component 210 after rotating by φ along the *y*'-axis. The out-of-plane angle θ is a rotation angle of the light-emitting plane of the phase compensation element 220 relative to a projection plane. For example, in FIG. 3, the out-of-plane angle θ indicates that the phase compensation element 220 overlaps the xoz plane of the display component 210 after rotating by θ along an *x*'*oz*' plane.

Based on the foregoing solution, the display assembly provided in this application may compensate for the dark-state light leakage of the display component through adjustment of different three-dimensional statuses of the phase compensation element. It may be understood that when the phase compensation element and the display component are precisely angle-matched, dark-field brightness of the display component can be reduced to a maximum extent.

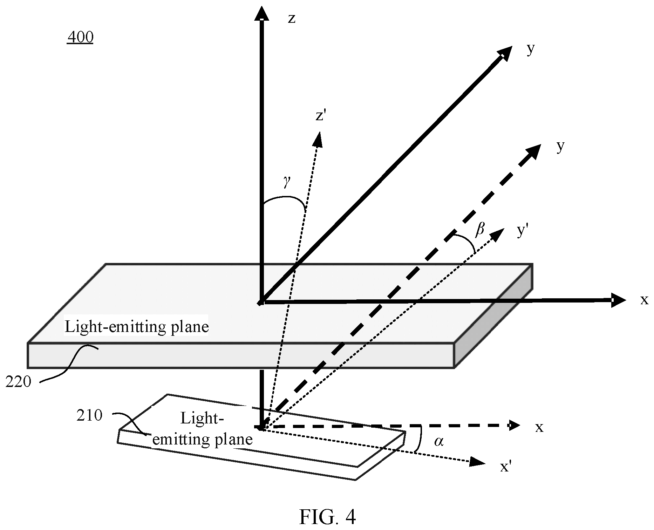

FIG. 4 is a diagram of a structure of a second display assembly 400 according to an embodiment of this application. The display assembly 400 includes a display component 210 and a phase compensation element 220. Compared with the display assembly 200 shown in FIG. 2, in FIG. 4, a light-emitting plane of the phase compensation element 220 is parallel to a horizontal plane, and a light-emitting plane of the display component 210 is obliquely placed relative to the horizontal plane. In this case, the light-emitting plane of the phase compensation element 220, namely, an x*oy* plane, is used as a reference. A normal line of the light-emitting plane of the phase compensation element 220 is in a z-axis direction, and the display component 210 rotates on all three coordinate axes. That is, the light-emitting plane of the display component 210 is an *x*'*oy*' plane. There is an included angle α not equal to 0 between an x-axis and an *x*'-axis. There is an included angle β not equal to 0 between a y-axis and a *y*'-axis. There is an included angle γ not equal to 0 between a z-axis and a *z*'-axis.

Similarly, there may alternatively be another arrangement scenario for the phase compensation element 220 and the display component 210. For example, when the phase compensation element 220 is located on a left side of the display component 210, the light-emitting plane of the phase compensation element 220 is parallel to an xoz plane, and a light beam of light leakage emitted by the display component 210 is propagated leftward to the phase compensation element 220.

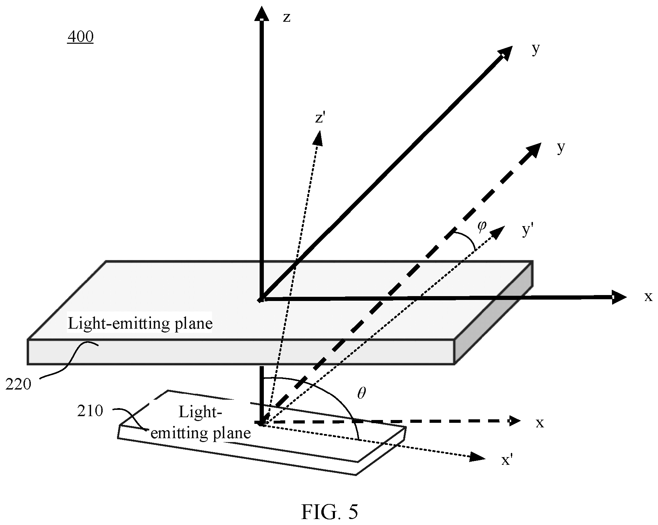

In addition, a three-dimensional spatial placement state of the display component 210 and the phase compensation element 220 in FIG. 4 may alternatively be described by using an in-plane angle φ and an out-of-plane angle θ, as shown in FIG. 5. In FIG. 5, the display component 210 overlaps the y-axis of the three-dimensionally placed phase compensation element 220 after rotating by the in-plane angle φ along the *y*' axis. The display component 210 overlaps the xoz plane of the three-dimensionally placed phase compensation element 220 after rotating by θ along an *x*'*oz*' plane For definitions of the in-plane angle φ and the out-of-plane angle θ, refer to related descriptions in FIG. 2. Details are not described herein again.

It should be noted that in both of the display assemblies shown in FIG. 2 to FIG. 4, a light-emitting plane of one component and the horizontal plane are used as examples for description. For example, in FIG. 2 and FIG. 3, the light-emitting plane of the display component 210 is the horizontal plane. In FIG. 4 and FIG. 5, the light-emitting plane of the phase compensation element 220 is the horizontal plane. It may be understood that, for a more general use scenario, a three-dimensional spatial placement state of the display component 210 and the phase compensation element 220 may alternatively be that neither the light-emitting plane of the display component 210 nor the light-emitting plane of the phase compensation element 220 is parallel to the horizontal plane, and rotation angles of the light-emitting plane of the display component 210 and the light-emitting plane of the phase compensation element 220 relative to each coordinate axis (an x-axis, a y-axis, and a z-axis in a Cartesian coordinate system) are different. For example, when neither the light-emitting plane of the display component 210 nor the light-emitting plane of the phase compensation element 220 is parallel to the horizontal plane, if rotation angles of the light-emitting plane of the display component 210 relative to the x, y, and z coordinate axes are respectively α1, β1, and γ1, and rotation angles of the light-emitting plane of the phase compensation element 220 relative to the x, y, and z coordinate axes are respectively α2, β2, and γ2, α1 is not equal to α2, β1 is not equal to β2, and γ1 is not equal to γ2.

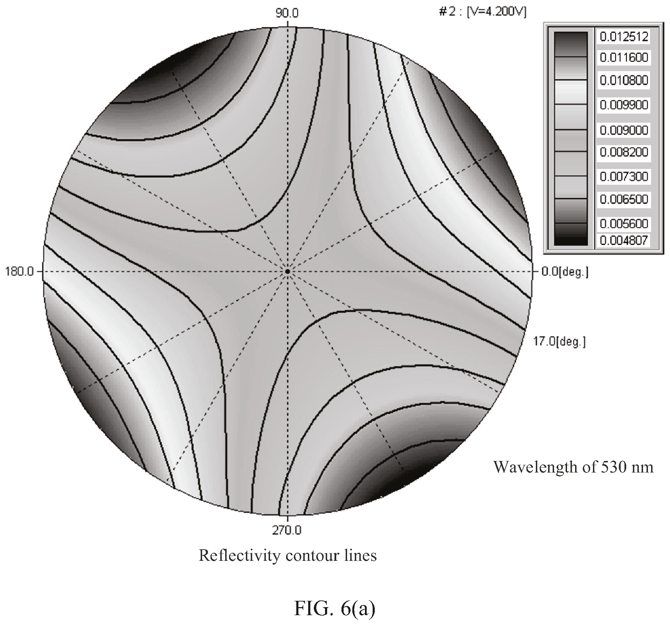

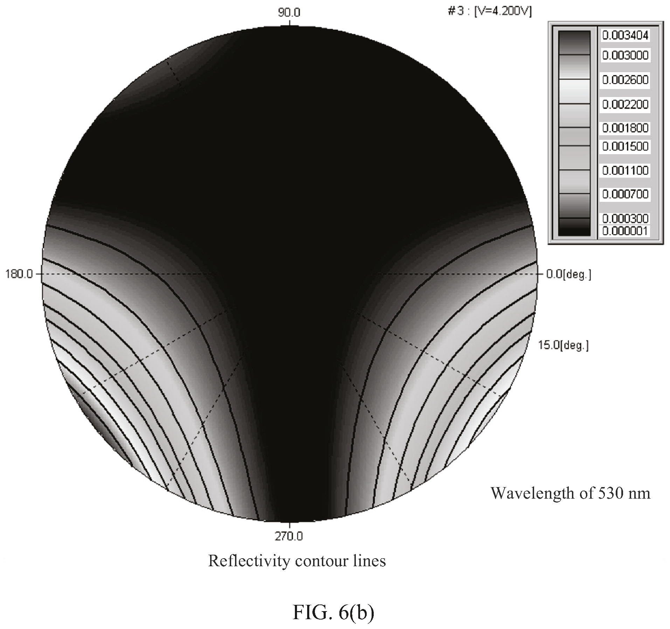

FIG. 6(a) and FIG. 6(b) are a diagram of simulated effect of light leakage according to an embodiment of this application. In FIG. 6(a) and FIG. 6(b), simulation is performed by using a phase compensation plate with a horizontal phase delay Re of 21 nm and a vertical phase delay Rth of 200 nm and a twisted nematic (twisted nematic, TN) LCoS in combination. As shown in FIG. 6(a), when an LCoS display assembly does not include the phase compensation plate, clear dark-state light leakage exists in angular distribution of light irradiated on an LCoS. As shown in FIG. 6(b), when the phase compensation plate and the LCoS are in a three-dimensional placement state (where the LCoS is placed horizontally, and the compensation plate is obliquely placed; or the compensation plate is horizontally placed, and the LCoS is obliquely placed), overall dark-state light leakage of the LCoS is further reduced compared with that in FIG. 6(a).

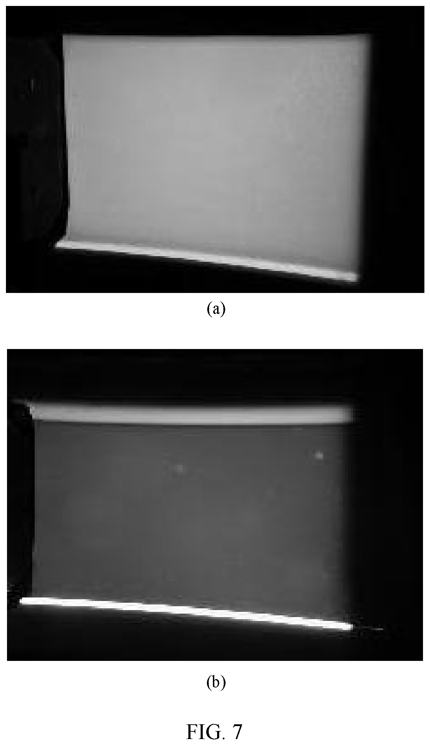

Corresponding to FIG. 6(a) and FIG. 6(b), FIG. 7 is a diagram of contrast effect according to an embodiment of this application. As shown in (a) in FIG. 7, when the LCoS display assembly does not include the phase compensation plate, it can be seen that an entire picture dark field is bright. As shown in (b) in FIG. 7, when the phase compensation plate and the LCoS are in a three-dimensional placement state (where the LCoS is horizontally placed, and the compensation plate is obliquely placed; or the compensation plate is horizontally placed, and the LCoS is obliquely placed), contrast is significantly improved, and the picture dark field clearly becomes dark. Therefore, it can be learned that the display assembly provided in this application can reduce the dark-state light leakage of the display component, to improve the display contrast.

It should be noted that the data in FIG. 6(a) and FIG. 6(b) and the simulated effect in FIG. 6(a), FIG. 6(b), and FIG. 7 are merely intended to describe that the solutions of this application can significantly reduce light leakage phenomena of the display component and improve the display contrast, but are not intended to limit the protection scope of this application.

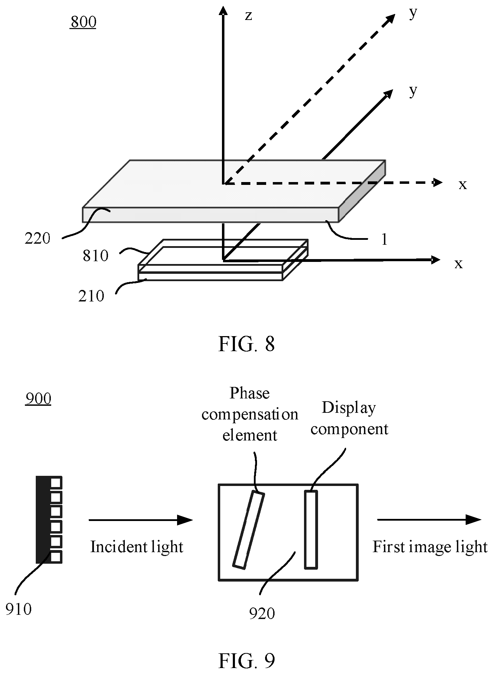

Because the plurality of light beams emitted from the light-emitting plane of the display component 210 are reflected and refracted for a plurality of times, interference effect may occur. Therefore, to further reduce reflected light from the light-emitting plane of the display component 210, FIG. 8 is a diagram of a structure of a third display assembly 800 according to an embodiment of this application. In FIG. 8, the display assembly further includes an anti-reflection element 830. The anti-reflection element 830 is located between a display component 210 and a phase compensation element 220, and is configured to reduce reflected light from a light-emitting plane of the display component 210. For functions and related descriptions of the display component 210 and the phase compensation element 220, refer to FIG. 2 or FIG. 4. Details are not described herein again.

Optionally, the anti-reflection element 810 is an anti-reflection coating (anti-reflection coating, AR) element.

It should be noted that a position of the anti-reflection element 810 and a quantity of anti-reflection elements 810 are not limited in this application. For example, in FIG. 8, the anti-reflection element 810 is arranged on the light-emitting surface of the display component 210. In some other embodiments, the anti-reflection element 810 may alternatively be arranged on a surface 1 of the phase compensation element 220. In some other embodiments, anti-reflection elements 810 may alternatively be arranged on both the surface 1 of the phase compensation element 220 and the light-emitting surface of the display component 210.

It should be further noted that, in FIG. 8, the display component 210 and the phase compensation element 220 are parallel. However, this application is not limited thereto. When one or two anti-reflection elements are disposed in the display assembly, for a three-dimensional spatial arrangement between the display component 210 and the phase compensation element 220, the display component 210 may be horizontally placed and the phase compensation element 220 may be placed in a three-dimensionally oblique manner as shown in FIG. 2; or the phase compensation element 220 may be horizontally placed and the display component 210 may be placed in a three-dimensionally oblique manner as shown in FIG. 4; or the display component 210 and the phase compensation element 220 are placed in different three-dimensionally oblique manners. This is not limited in this application.

The display assembly provided in embodiments of this application is described above with reference to FIG. 2 to FIG. 8. The following describes some possible structures of a display system provided in this application with reference to the display assemblies shown in FIG. 2 to FIG. 8.

FIG. 9 is a diagram of a first display system 900 according to an embodiment of this application. As shown in FIG. 9, the display system 900 includes a light source 910 and a display assembly 920. The light source 910 is configured to: generate incident light, and emit the incident light to the display assembly 920. The display assembly 920 generates a first image based on the incident light, and emits first image light. It may be understood that the display assembly 920 may be the display assembly 200 shown in FIG. 2, or the display assembly 400 shown in FIG. 4, or the display assembly 600 shown in FIG. 6(a) and FIG. 6(b), or another display assembly within the protection scope of this application. In addition, for other descriptions of the display assembly 920, refer to the foregoing related part. Details are not described herein again.

It should be noted that, based on different display components included in the display assembly 920, the light source 910 may be an array light source including a light-emitting diode (light-emitting diode, LED), a laser light source, a cathode fluorescent tube, or the like. For example, when the display component included in the display assembly 920 is an LCoS, the light source 910 may be a red, green, and blue tri-color light-emitting diode light source, or the light source 910 may be a red, green, and blue tri-color laser light source, and jointly forms an LCoS display system with the LCoS. Alternatively, when the display component included in the display assembly 920 is an LCD, the light source 910 may be a linear light source, to be specific, a red, green, and blue tri-color cold cathode fluorescent tube, and forms an LCD display system with the LCD.

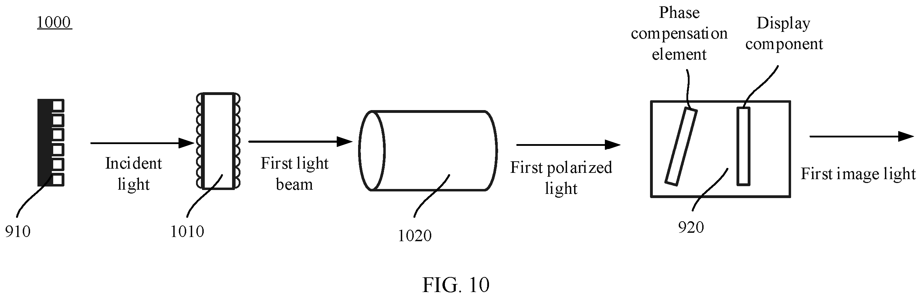

To further improve display effect, FIG. 10 is a diagram of a second display system 1000 according to an embodiment of this application. As shown in FIG. 10, the display system 1000 includes a light source 910, a micro lens array 1010, a first polarization element 1020, and a display assembly 920. The light source 910 is configured to generate incident light, and emit the incident light to the micro lens array 1010. The micro lens array 1010 is configured to: homogenize incident light, and emit a homogenized first light beam to the first polarization element 1020. The first polarization element 1020 is configured to: convert the first light beam into first polarized light, and emit the first polarized light to the display assembly 920. The display assembly 920 generates a first image based on the first polarized light, and emits first image light.

Compared with the display system 900 shown in FIG. 9, the micro lens array 1010 in the display system 1000 can shape an incident light beam, so that a light spot of the first light beam is homogenized. Optionally, the micro lens array 1020 is a compound-eye lens. When the micro lens array 1020 is a compound-eye lens, the micro lens array 1020 may be a double-row compound-eye lens or a single-row compound-eye lens. This is not limited in this application.

In this embodiment of this application, the first polarization element 1020 may be selected based on a type of a display component in the display assembly 920. For example, if the display component included in the display assembly 920 is an LCoS display component, and the LCoS display component is of a P-type phase modulation type, the first polarization element 1020 is a P-polarized light polarizer. If the display component included in the display assembly 920 is an LCoS display component, and the LCoS display component is of an S-type phase modulation type, the first polarization element 1020 is an S-polarized light polarizer.

It may be understood that for other descriptions of the light source 910 and the display assembly 920, refer to related parts in FIG. 9. Details are not described herein again.

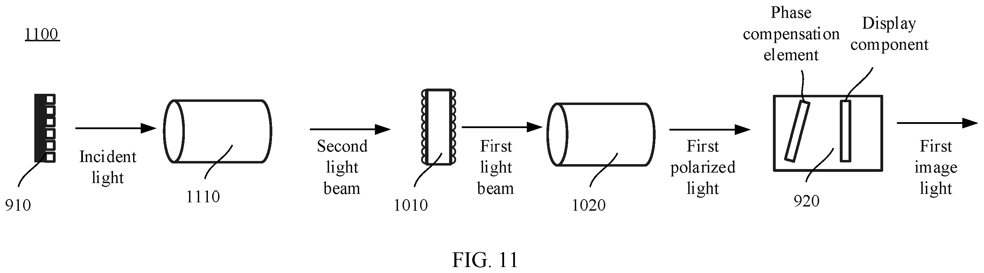

To further improve light homogenization performance of the micro lens array 1010, in some embodiments, a collimating element, for example, a collimating lens, may be arranged in front of the micro lens array 1010, so that the light homogenization performance of the micro lens array 1010 is better. As shown in FIG. 11, a collimating element 1110 is configured to: collimate the incident light from the light source 910, and emit a collimated second light beam to the micro lens array 1010, so that the micro lens array 1010 homogenizes the second light beam and generates the first light beam.

It may be understood that, for descriptions of other elements in the display system 1100, refer to the foregoing related parts. Details are not described herein again.

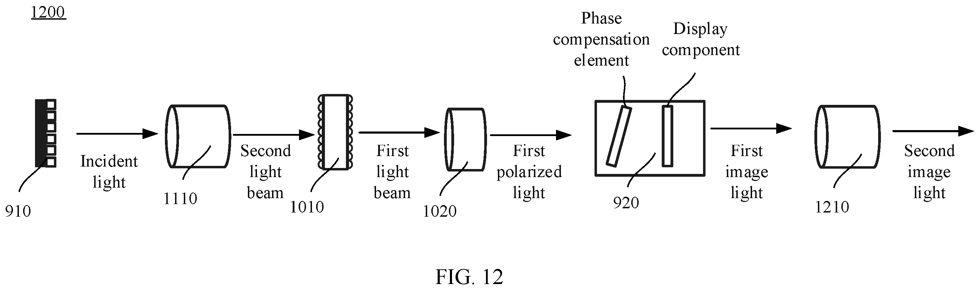

It should be noted that when the display assembly provided in this embodiment of this application is used in a projection display system, FIG. 12 is a diagram of a structure of a fourth display system 1200 according to an embodiment of this application. In FIG. 12, a display assembly 920 emits first image light to a projection module 1210, and the projection module 1210 is configured to generate a second image based on the first image light.

Optionally, the projection module 1210 is a projection lens including one or more lenses, and can enlarge a first image, to generate the enlarged second image.

It may be understood that, for descriptions of other elements in the display system 1200, refer to the foregoing related parts. Details are not described herein again.

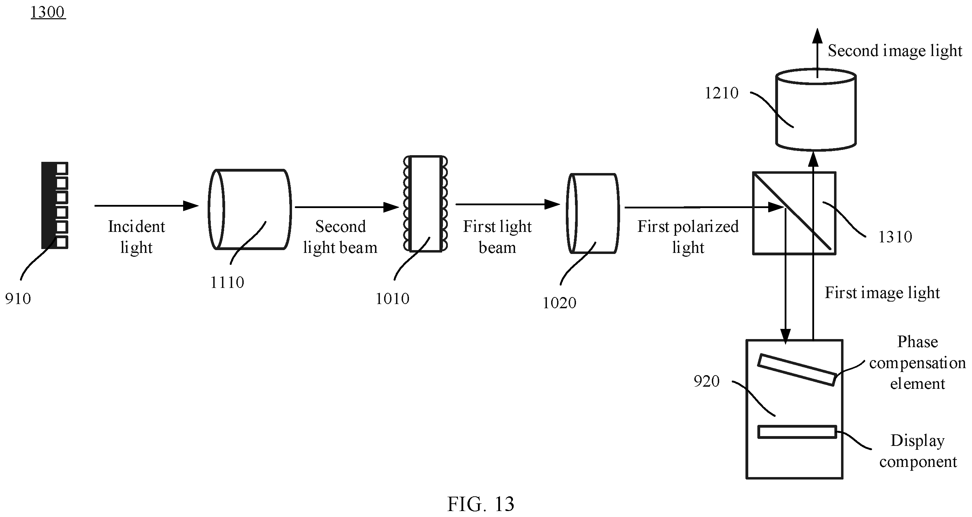

FIG. 13 is a diagram of a structure of a fifth display system 1300 according to an embodiment of this application. FIG. 13 is different from FIG. 12 in that first image light emitted by a display assembly 920 is polarized light, and a polarization direction of the first image light is perpendicular to a polarization direction of first polarized light. Therefore, a polarizing beam splitting element 1310, for example, a polarizing beam splitter, located between a first polarization element 1020 and the display assembly 920 may be disposed to achieve effect of reflecting the first polarized light and transmitting the first image light, so that effect of folding an optical path can be achieved.

It may be understood that, for descriptions of other elements in the display system 1300, refer to the foregoing related parts. Details are not described herein again.

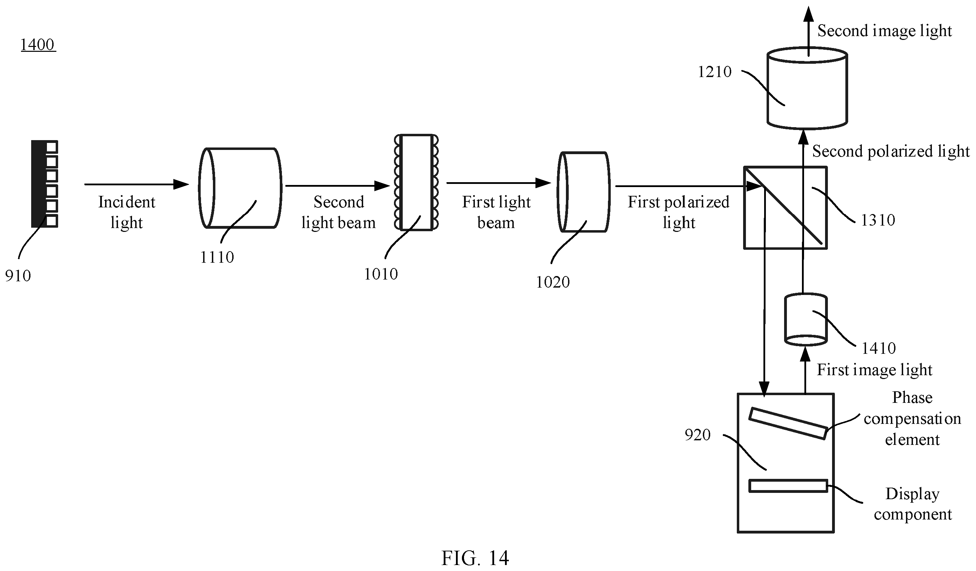

Optionally, to further remove stray light in the first image light, a second polarization element may be further arranged before the first image light enters the polarizing beam splitting element 1310, as shown in FIG. 14. A polarization direction of a second polarization element 1410 is perpendicular to a polarization direction of the first polarization element 1020, and the second polarization element 1410 is configured to convert the first image light into complete polarized light.

It may be understood that, for descriptions of other elements in the display system 1400, refer to the foregoing related parts. Details are not described herein again.

It should be noted that FIG. 9 to FIG. 14 show merely examples of the display system provided in this application. It should be understood that any display system including the display assembly provided in embodiments of this application should fall within the protection scope of this application.

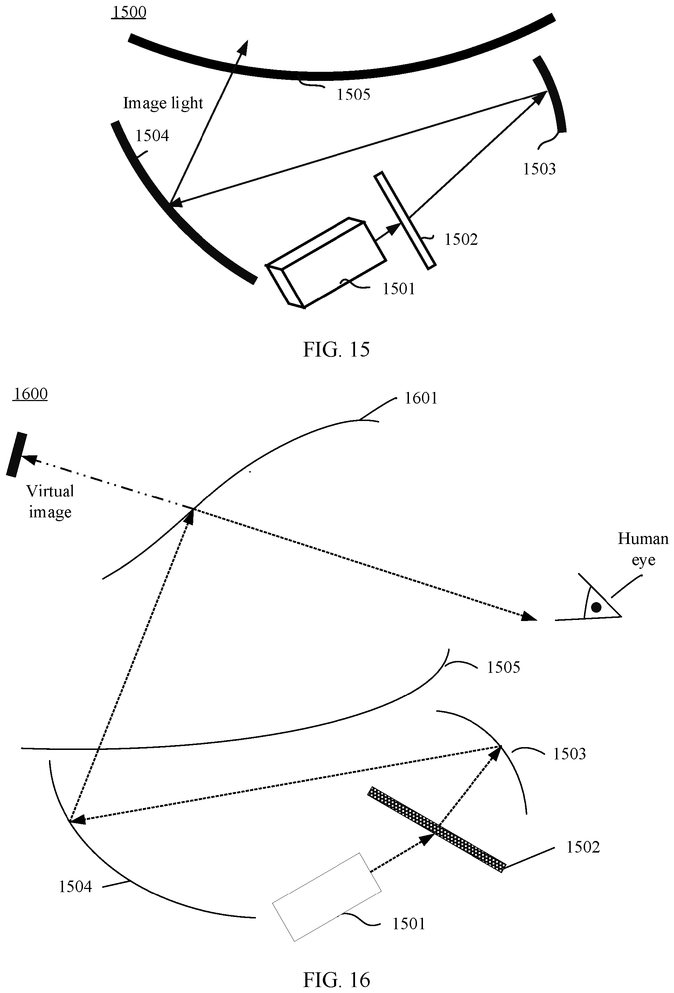

FIG. 15 is a diagram of a HUD system 1500 according to an embodiment of this application. As shown in FIG. 15, the HUD system 1500 includes a picture generation unit (picture generation unit, PGU) 1501, a diffusion screen 1502, a first reflection element 1503, and a second reflection element 1504. The PGU 1501 is configured to project image light onto the diffusion screen 1502. The diffusion screen 1502 is configured to: transmit the image light from the PGU 1501 to the first reflection element 1503, and generate a relay image based on the image light from the PGU 1501. The first reflection element 1503 is configured to reflect, to the second reflection element 1504, the image light emitted by the diffusion screen 1502. The second reflection element 1504 is configured to reflect, to a human eye, the image light reflected by the first reflection element 1503. The PGU 1501 may be any display system shown in FIG. 9 to FIG. 14, or a new display system extended based on any display system in FIG. 9 to FIG. 14.

Optionally, the HUD system 1500 may further include a dust cover 1505. The dust cover 1505 has functions of isolating external high temperatures, preventing internal temperatures of the HUD system 1500 from becoming excessively high, preventing external dust from entering an apparatus, or the like.

It should be noted that, in the HUD system 1500 shown in FIG. 15, the first reflection element 1503 may be a concave mirror, a convex mirror, or a plane mirror whose surface is a free-form surface. This is not limited in this application.

It may be understood that, a quantity of reflection elements included in the HUD system 1500 is not limited to that shown in FIG. 15, and may be correspondingly adjusted according to a requirement.

When the HUD system 1500 is applied to a transportation means, FIG. 16 is a diagram of an optical path 1600 of a HUD system applied to a transportation means according to an embodiment of this application. Specifically, the PGU 1501 generates image light and projects the image light onto the diffusion screen 1502. The diffusion screen 1502 transmits the image light from the PGU 1501 to the first reflection element 1503, and then the first reflection element 1503 reflects the diffused image light to the second reflection element 1504. After being reflected by 1504, the image light is transmitted through a light shielding cover 1505 and is reflected by a windshield 1601 to a human eye for imaging. An image generated based on the image light may be an augmented reality display image used to display information such as indication information and navigation information of an external object. Alternatively, an image generated based on the image light may be a status display image used to display status information of the transportation means. A vehicle is used as an example. The status information of the transportation means includes but is not limited to information such as a driving speed, a driving mileage, a fuel amount, a water temperature, and a vehicle light status.

It may be understood that a transportation means to which the solutions of this application may be applied includes but is not limited to a vehicle, an airplane, a train, a ship, or the like.

In addition, an embodiment of this application further provides a transportation means. The transportation means includes any one of the foregoing display devices. The transportation means includes but is not limited to a vehicle, an airplane, a train, a ship, or the like.

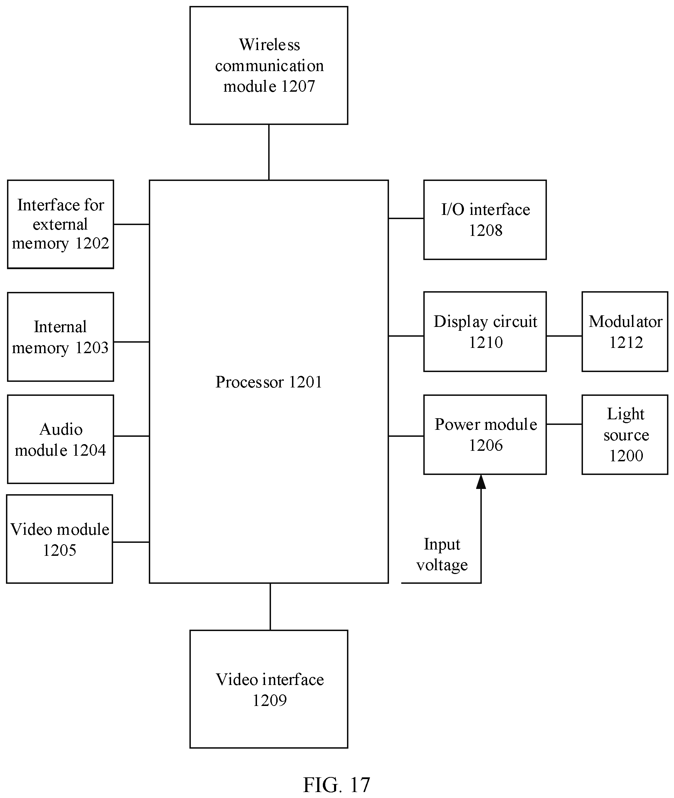

FIG. 17 is a circuit schematic of a display apparatus according to an embodiment of this application. As shown in FIG. 17, a circuit in the display apparatus mainly includes a main processor (host CPU) 1201, an interface for external memory 1202, an internal memory 1203, an audio module 1204, a video module 1205, a power module 1206, a wireless communication module 1207, an I/O interface 1208, a video interface 1209, a display circuit 1210, and a modulator 1212. The main processor 1201 may be connected, through a bus, to peripheral elements of the main processor 1201, such as the interface for external memory 1202, the internal memory 1203, the audio module 1204, the video module 1205, the power module 1206, the wireless communication module 1207, the I/O interface 1208, the video interface 1209, and the display circuit 1210. The main processor 1201 may be referred to as a front-end processor.

In addition, the circuit schematic in this embodiment of this application does not constitute a specific limitation on the display apparatus. In some other embodiments of this application, the display apparatus may include more or fewer components than those shown in the figure, or a combination of some components, or splits from some components, or a different component layout. The components shown in the figure may be implemented by hardware, software, or a combination of software and hardware.

The main processor 1201 includes one or more processing units. For example, the main processor 1201 may include an application processor (Application Processor, AP), a modem processor, a graphics processing unit (Graphics Processing Unit, GPU), an image signal processor (Image Signal Processor, ISP), a controller, a video codec, a digital signal processor (Digital Signal Processor, DSP), a baseband processor, and/or a neural-network processing unit (Neural-Network Processing Unit, NPU), and the like. Different processing units may be independent components, or may be integrated into one or more processors.

A memory may be further disposed in the main processor 1201, and is configured to store instructions and data. In some embodiments, the memory in the main processor 1201 is a cache. The memory may store instructions or data that has been recently used or cyclically used by the main processor 1201. If the main processor 1201 needs to use the instructions or the data again, the main processor may directly invoke the instructions or the data from the memory. This avoids repeated access, reduces waiting time of the main processor 1201, and therefore improves system efficiency.

In some embodiments, the display apparatus may further include a plurality of input/output (Input/Output, I/O) interfaces 1208 connected to the main processor 1201. The interface 1208 may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a universal serial bus (Universal Serial Bus, USB) interface, and/or the like. The I/O interface 1208 may be connected to a device such as a mouse, a touchpad, a keyboard, a camera, a speaker/horn, a microphone, or the like, or may be connected to a physical button (for example, a volume button, a brightness adjustment button, a power-on/power-off button, or the like) on the display apparatus.

The interface for external memory 1202 may be configured to connect to an external storage card, for example, a micro SD card, to extend a storage capability of the display apparatus. The external storage card communicates with the main processor 1201 through the interface for external memory 1202, to implement a data storage function.

The internal memory 1203 may be configured to store computer-executable program code. The executable program code includes instructions. The internal memory 1203 may include a program storage region and a data storage region. The program storage region may store an operating system, an application required by at least one function (for example, a call function or a time setting function), and the like. The data storage area may store data (such as a phone book and world time) created in a process of using the display apparatus, and the like. In addition, the internal memory 1203 may include a high-speed random access memory, and may further include a non-volatile memory, for example, at least one magnetic disk storage device, a flash storage device, a universal flash storage (Universal Flash Storage, UFS), or the like. The main processor 1201 executes various functional applications and data processing of the display apparatus by running the instructions stored in the internal memory 1203 and/or the instructions stored in the memory disposed in the main processor 1201.

The display apparatus may implement audio functions such as music playing and call through the audio module 1204, the application processor, and the like.

The audio module 1204 is configured to convert digital audio information into an analog audio signal output, and is also configured to convert an analog audio input into a digital audio signal. The audio module 1204 may be further configured to encode and decode an audio signal, for example, perform voice playing or voice recording. In some embodiments, the audio module 1204 may be disposed in the main processor 1201, or some functional modules of the audio module 1204 are disposed in the main processor 1201.

The video interface 1209 may receive audio and video signal input externally, and may be specifically a high-definition multimedia interface (High-Definition Multimedia Interface, HDMI), a digital visual interface (Digital Visual Interface, DVI), a video graphics array (Video Graphics Array, VGA), a display port (Display port, DP), or the like. The video interface 1209 may further output a video externally. When the display apparatus is used as a head-up display, the video interface 1209 may receive a speed signal and a power signal that are input by a nearby device, and may further receive an AR video signal input externally. When the display apparatus is used as a projector, the video interface 1209 may receive a video signal input by an external computer or a terminal device.

The video module 1205 may decode a video input by the video interface 1209, for example, perform H.264 decoding. The video module may further encode a video collected by the display apparatus, for example, perform H.264 encoding on a video collected by an external camera. In addition, the main processor 1201 may also decode the video input by the video interface 1209, and then output a decoded image signal to the display circuit 1210.

The display circuit 1210 and the modulator 1212 are configured to display a corresponding image. In this embodiment, the video interface 1209 receives a video source signal input externally, the video module 1205 performs decoding and/or digitization processing and outputs one or more image signals to the display circuit 1210, and the display circuit 1210 drives, based on the input image signal, the modulator 1212 to perform imaging for incident polarized light, to output image light. In addition, the main processor 1201 may also output the one or more image signals to the display circuit 1210.

In this embodiment, the display circuit 1210 and the modulator 1212 are electronic elements in the PGU 1301, and the display circuit 1210 may be referred to as a drive circuit.

The power module 1206 is configured to supply power to the main processor 1201 and a light source 1200 based on input power (for example, a direct current). The power module 1206 may include a rechargeable battery, and the rechargeable battery may supply power to the main processor 1201 and the light source 1200. Light emitted by the light source 1200 may be propagated to the modulator 1212 for imaging, to form an image light signal.

The wireless communication module 1207 may enable the display apparatus to perform wireless communication with the outside, and may provide wireless communication solutions such as a wireless local area network (Wireless Local Area Network, WLAN) (for example, a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near-field communication (Near-Field Communication, NFC) technology, and an infrared (Infrared, IR) technology. The wireless communication module 1207 may be one or more components integrating at least one communication processing module. The wireless communication module 1207 receives an electromagnetic wave through an antenna, performs frequency modulation and filtering processing on an electromagnetic wave signal, and sends a processed signal to the main processor 1201. The wireless communication module 1207 may further receive a to-be-sent signal from the main processor 1201, perform frequency modulation and amplification on the signal, and convert, through the antenna, the signal into an electromagnetic wave for radiation.

In addition, in addition to being input through the video interface 1209, video data decoded by the video module 1205 may alternatively be received in a wireless manner through the wireless communication module 1207 or be read from the external memory. For example, the display apparatus may receive the video data from the terminal device or an in-vehicle entertainment system through a wireless local area network in a vehicle, and the display apparatus may further read audio and video data stored in the external memory.

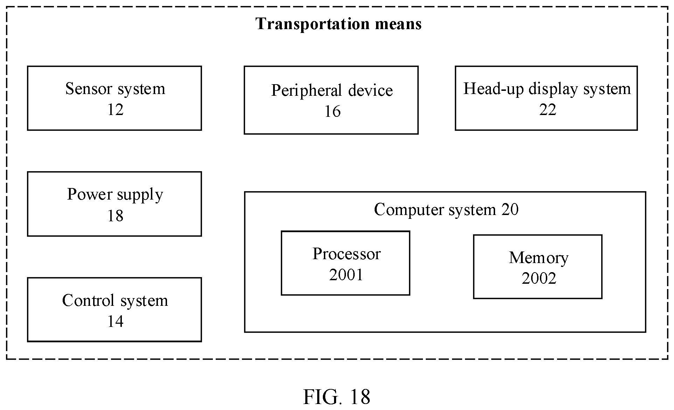

The display apparatus may be mounted on a transportation means. FIG. 18 is a diagram of a possible functional framework of a transportation means according to an embodiment of this application.

As shown in FIG. 18, the functional framework of the transportation means may include various subsystems such as a sensor system 12, a control system 14, one or more peripheral devices 16 (one is shown as an example in the figure), a power supply 18, a computer system 20, and a head-up display system 22. Optionally, the transportation means may further include another functional system, for example, an engine system that supplies power to the transportation means. This is not limited herein in this application.

The sensor system 12 may include several detection apparatuses. The detection apparatuses can sense measured information, and convert, according to a specific rule, the sensed information into an electrical signal or information in another required form for output. As shown in the figure, the detection apparatuses may include a global positioning system (global positioning system, GPS), a vehicle speed sensor, an inertial measurement unit (inertial measurement unit, IMU), a radar unit, a laser rangefinder, a camera apparatus, a wheel speed sensor, a steering sensor, a gear sensor, another element used for automatic detection, or the like. This is not limited in this application.

The control system 14 may include several elements, for example, a steering unit, a brake unit, a lighting system, an autonomous driving system, a map navigation system, a network time system, and an obstacle avoidance system shown in the figure. Optionally, the control system 14 may further include elements such as a throttle controller and an engine controller that are configured to control a driving speed of a vehicle. This is not limited in this application.

The peripheral device 16 may include several elements, for example, a communication system, a touchscreen, a user interface, a microphone, and a speaker shown in the figure. The communication system is configured to implement network communication between the transportation means and another device other than the transportation means. During actual application, the communication system may implement network communication between the transportation means and the another device by using a wireless communication technology or a wired communication technology. The wired communication technology may mean that the vehicle communicates with the another device through a network cable, an optical fiber, or the like.

The power supply 18 represents a system used for providing power or energy for the vehicle, and may include but is not limited to a rechargeable lithium battery and lead-acid battery. During actual application, one or more battery components in the power supply are configured to provide electrical energy or energy for starting the vehicle. A type and a material of the power supply are not limited in this application.

Several functions of the transportation means are all controlled and implemented by the computer system 20. The computer system 20 may include one or more processors 2001 (one processor is shown as an example in the figure) and a memory 2002 (which may also be referred to as a storage apparatus). During actual application, the memory 2002 is also disposed inside the computer system 20, or may be disposed outside the computer system 20, for example, used as a cache in the transportation means. This is not limited in this application. The processor 2001 may include one or more general-purpose processors, for example, a graphics processing unit (graphics processing unit, GPU).

The processor 2001 may be configured to run a related program stored in the memory 2002 or instructions corresponding to a program, to implement a corresponding function of the vehicle.

The memory 2002 may include a volatile memory (volatile memory), for example, a RAM. The memory may alternatively include a non-volatile memory (non-volatile memory), for example, a ROM, a flash memory (flash memory), an HDD, or a solid-state drive SSD. The memory 2002 may alternatively include a combination of the foregoing types of memories. The memory 2002 may be configured to store a set of program code or instructions corresponding to program code, so that the processor 2001 invokes the program code or the instructions stored in the memory 2002 to implement a corresponding function of the vehicle. In this application, the memory 2002 may store a set of program code used to control the vehicle. The processor 2001 may control safe driving of the vehicle by invoking the program code. A manner of implementing safe driving of the vehicle is specifically described in detail below in this application.

Optionally, in addition to storing the program code or instructions, the memory 2002 may further store information such as a road map, a driving route, and sensor data. The computer system 20 may implement a vehicle-related function in combination with other elements in the diagram of the functional framework of the vehicle, for example, the sensor and the GPS in the sensor system. For example, the computer system 20 may control a driving direction, a driving speed, or the like of the transportation means based on data input of the sensor system 12. This is not limited in this application.

The head-up display system 22 may include several elements, for example, a windshield, a controller, and a head-up display shown in the figure. The controller 222 is configured to: generate an image (for example, generate an image including a vehicle status such as a vehicle speed and a power/fuel amount, or an image of augmented reality AR content) according to a user instruction, and send the image to the head-up display for display. The head-up display may include a picture generation unit and a reflection mirror combination. The windshield is configured to cooperate with the head-up display to implement a light path of the head-up display system, so that a target image is presented in front of a driver. Functions of some elements in the head-up display system may alternatively be implemented by another subsystem of the vehicle. For example, the controller may alternatively be an element in the control system.

FIG. 18 in this application shows that four subsystems are included. The sensor system 12, the control system 14, the computer system 20, and the head-up display system 22 are merely examples, and do not constitute a limitation. During actual application, the transportation means may combine several elements in the vehicle based on different functions, to obtain subsystems with corresponding different functions. During actual application, the transportation means may include more or fewer systems or elements. This is not limited in this application.

The transportation means may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in embodiments of this application.

Unless otherwise defined, a technical term or a scientific term used herein should have a general meaning understood by a person of ordinary skill in the art of the present disclosure.

The foregoing descriptions are merely an embodiment of this application, but are not intended to limit this application. Any modification, equivalent replacement, or improvement made without departing from the principle of this application shall fall within the protection scope of this application.

## Claims

1. A display assembly, comprising: a display component and a phase compensation element, wherein there is a first included angle greater than 0 between a normal line of a light-emitting plane of the display component and a normal line of a light-emitting plane of the phase compensation element, there is a second included angle greater than 0 between a first coordinate axis of the light-emitting plane of the display component and the first coordinate axis of the light-emitting plane of the phase compensation element, and there is a third included angle greater than 0 between a second coordinate axis of the light-emitting plane of the display component and the second coordinate axis of the light-emitting plane of the phase compensation element;
the display component is configured to emit a plurality of first light beams from a plurality of different angles; and
the phase compensation element is configured to compensate for a phase difference of each of the plurality of first light beams.

2. The display assembly according to claim 1, wherein the display assembly further comprises an anti-reflection element, and the anti-reflection element is located between the display component and the phase compensation element; and
the anti-reflection element is configured to reduce reflected light from the light-emitting plane of the display component.

3. The display assembly according to claim 2, wherein the anti-reflection element is arranged on a surface of the phase compensation element.

4. The display assembly according to claim 3, wherein the anti-reflection element is arranged on a surface of the light-emitting plane of the display component.

5. A display system, comprising a light source and the display assembly according to any one of claims 1 to 4, wherein
the light source is configured to: generate incident light, and emit the incident light to the display assembly; and
the display assembly generates a first image based on the incident light.

6. The display system according to claim 5, wherein the display system further comprises a micro lens array and a first polarization element, the micro lens array is located between the light source and the first polarization element, and the first polarization element is located between the micro lens array and the display assembly;
the micro lens array is configured to: homogenize the incident light, and emit a homogenized second light beam to the first polarization element;
the first polarization element is configured to: convert the second light beam into first polarized light, and emit the first polarized light to the display assembly; and
the display assembly generates the first image based on the first polarized light.

7. The display system according to claim 6, wherein the display system further comprises a collimating element, and the collimating element is located between the light source and the micro lens array;
the collimating element is configured to: collimate the incident light, and emit a collimated third light beam to the micro lens array; and
the micro lens array is specifically configured to: homogenize the third light beam, and generate the second light beam.

8. The display system according to claim 7, wherein the display system further comprises a projection module, wherein
the display assembly is configured to: emit, to the projection module, first image light corresponding to the first image; and
the projection module is configured to generate a second image based on the first image light.

9. The display system according to claim 8, wherein the display system further comprises a second polarization element, and the second polarization element is located between the display assembly and the projection module;
the second polarization element is configured to: convert the first image light into second polarized light, and emit the second polarized light to the projection module, wherein a polarization direction of the first polarized light is perpendicular to a polarization direction of the second polarized light; and
the projection module is configured to generate the second image based on the second polarized light.

10. The display system according to claim 9, wherein the display system further comprises a polarizing beam splitter, and the polarizing beam splitter is located between the first polarization element and the display assembly; and
the polarizing beam splitting element is configured to: reflect the first polarized light to the display component, and transmit the second polarized light to the projection module.

11. A transportation means, comprising the display system according to any one of claims 8 to 10 and a windshield, wherein
the projection module is configured to: emit, to the windshield, second image light corresponding to the second image; and
the windshield is configured to reflect the second image light to a human eye.

12. An in-vehicle system, comprising the display system according to any one of claims 5 to 10.
